Europäisches Patentamt

**European Patent Office**

**Office européen des brevets**

(11) Publication number: **0 158 535**
**A2**

## (12) EUROPEAN PATENT APPLICATION

(21) Application number: **85302475.0**

(22) Date of filing: **09.04.85**

(51) Int. Cl.⁴: **C 09 J 7/02**
**B 44 C 1/10, B 44 F 1/08**
**D 06 Q 1/00**

(30) Priority: **05.04.84 GB 8408756**

(43) Date of publication of application:
**16.10.85 Bulletin 85/42**

(84) Designated Contracting States:
**DE FR IT**

(71) Applicant: **Worth, Ernest Henry**
**Edwalton Lodge Meltham Road**
**Edwalton Nottingham(GB)**

(72) Inventor: **Worth, Ernest Henry**
**Edwalton Lodge Meltham Road**
**Edwalton Nottingham(GB)**

(74) Representative: **Coxon, Philip et al,**
**Eric Potter & Clarkson 14 Oxford Street**
**Nottingham NG1 5BP(GB)**

(54) **Laminated material.**

(57) A laminated material comprises a layer (2) of a microcellular material capable of changing colour in response to the application of heat and pressure; a layer of adhesive (3) bonded to the layer of microcellular material. The laminated material can be used in a method of applying a decorative layer or motif (13) to a substrate (11) using a die (5). The die includes shaped projections (10) for heating and compressing discrete areas of the microcellular material in order to change its colour, and includes severing edges (9) for cutting the decorative layer or motif (13) from the laminated material.

Fig.3

LAMINATED MATERIAL

This invention relates to a laminated material.

In my U.K. Patent Specification No. 1,572,789 there is described and claimed a method for the application of motifs to textiles. The method comprises assembling a layer of decorative material and a layer of hot melt adhesive, with the textile to which the motif is to be applied. Heat is then applied to the assembly via a die, which is shaped to correspond to the desired motif, whereby the hot melt adhesive is activated in the peripheral regions of the motif in order to adhere the decorative material to the textile substrate in the peripheral regions. The die is then removed and the laminate is stripped from the substrate leaving only the motif defined by the die on the substrate.

According to one aspect of the present invention there is provided a laminated material comprising a layer of a microcellular material capable of changing colour in response to the application of heat and pressure, and a layer of an adhesive bonded thereto.

Preferably the microcellular material is a microporous material, more preferably microporous coagulated polyurethane. This can be produced by coagulation from an emulsion in order to form a sheet.

The surface of the microcellular material not bonded to the adhesive is preferably provided with a sueded appearance.

Preferably the microcellular material is capable of changing colour at temperatures in the range of about 120°C to about 180°C more preferably at about 135°C to about 180°C, and most preferably about 145°C to about 180°C.

The heat may be applied to the laminated material by means of a heated die. Alternatively the heat can be generated internally in the microcellular material, for example, by ultrasonics.

The adhesive is desirably an activatable adhesive having a latent adhesive capacity. The adhesive may be activated by the application of, for example, heat, pressure, a solvent or ultrasonics.

In one embodiment the activatable adhesive is a hot-melt adhesive such as a polyamide, polyester or polyurethane hot-melt adhesive. Conveniently the hot-melt adhesive may be activated at temperatures above about 90°C but below the temperatures at which the microcellular material is capable of changing colour.

In one method of applying the hot-melt adhesive to the microcellular material, a film of the adhesive is adhered to the microcellular material. This film may be first coated on a release agent such as a release paper or a plastic film such as polyethylene. The film of adhesive can be heated to a temperature sufficient to activate the adhesive in order to bond it to the microcellular material. The release agent may then be stripped from the adhesive.

In another method of applying the hot-melt adhesive to the microcellular material, the adhesive may be dispersed over the microcellular material in powder form and heated to activate the adhesive in order to bond it to the microcellular material. A hot-melt adhesive in the form of, for example, a polyester/polyamide copolymer powder is suitable for use in this method.

In another embodiment the adhesive is of the kind which can be cross-linked by heat and may comprise a urethane material.

Most preferably the adhesive layer is formed from a polyurethane pre-polymer solution which is prepared by mixing polyol and isocyanate components with a solvent.

Advantageously the adhesive is stable at room temperature, and cross-links rapidly and irreversibly at temperatures above about 90°C.

It is desirable that substantially no cross-linking of the adhesive occurs at temperatures below about 80°C.

In one embodiment the adhesive is applied to the surface of the microcellular material by spraying. In this embodiment a solution of the adhesive in a solvent may be sprayed onto the surface through an airless dispenser pump and hand spray equipment.

The adhesive may comprise a water based polyurethane such as an aliphatic polyester/urethane block polymer,and in this case an aqueous solvent may be used. Other urethane systems may be used and the solvent may be an organic solvent.

After the solution has been sprayed on the surface, the solvent may be removed, for example by evaporation. If necessary, heat may be applied in order to quicken the evaporation process. This leaves the adhesive uniformly coated on the surface in a dry substantially non-adhesive condition.

In an alternative embodiment a film of adhesive is applied to the surface of the microcellular material. In this embodiment a solution of the adhesive may first be coated on a release agent such as release paper or polyethythene.

The film advantageously possesses charateristics of a hot-melt adhesive at temperatures below the cross-linking temperature, so that it can be adhered to the surface of the microcellular material at a temperature below the cross-linking temperature. After the adhesive has been adhered to the surface of the microcellular material, the release agent may be stripped from the adhesive.

According to a further aspect of the invention there is provided a method of applying a decorative layer or motif to a substrate, comprising assembling a laminated material as described above with the substrate, applying heat and pressure by means of a heated die to compress discrete areas of the upper surface of the microcellular material, and activating the adhesive in order to effect bonding between the laminated material and the substrate.

Advantageously the adhesive is an activatable adhesive as described above, which is heated to a temperature above the temperature at which it activates.

Preferably the decorative layer or motif comprises a label, more preferably a label for a garment. The decorative layer or motif may also comprise decorative panelling or eyelets. The substrate is preferably a garment, such as jeans, but may form part of a shoe upper, a belt or a handbag.

The substrate may be any suitable natural or synthetic material. In particular the substrate may be a textile material such as natural suede leather, artificial suede leather, canvas, coated or woven fabrics, knitted fabrics, non-woven fabrics, plastics such as polyvinyl chloride or polyurethane.

Advantageously, the die includes a shaped projection which is adapted to heat and compress the discrete areas of the microcellular material. This causes the discrete areas to take on an apparently different colour.

The die may be heated to a temperature in the range of $120^{\circ}C$ to $180^{\circ}C$, more preferably $135^{\circ}C$ to $180^{\circ}C$ and most preferably $145^{\circ}C$ to $180^{\circ}C$.

The shaped projection can be configured to produce a wide variety of different effects upon the surface of the microporous material, such as leather graining, simulated stitching, imitation quilting and logos.

The pressure applied to the die varies according to the surface area of the shaped projection which contacts the laminated material. Typically the pressure applied to the die would be in the range 5 pounds/sq inch to 150 pounds/sq inch.

The die may also include a severing edge for cutting the decorative layer or motif from the laminated material. The severing edge may be adapted to act as a heating zone in order to activate the adhesive in the peripheral regions of the decorative layer or motif, thereby bonding the decorative layer or motif to the substrate.

According to a further aspect of the invention there is provided a label on a substrate, said label comprising a laminated material as described above. The substrate may be the same as the substrate described above.

Since the laminated material according to the invention is capable of changing colour in response to the application of heat and pressure it is not necessary to use additional materials such as solvents in order to effect the colour change. Furthermore the adhesive layer bonded to the microcellular layer enables the laminated material to be subsequently bonded to a substrate.

Reference is now made to the accompanying drawings in which:

Figure 1 is a cross-sectional view of a laminated material according to the invention;

Figure 2 is a perspective view of a die used in conjunction with the method of the present invention;

Figure 3 is a cross sectional view of a laminated material according to the invention and a substrate, prior to assembly using the method of the present invention; and

Figure 4 is a perspective view of the laminated material and the substrate after assembly using the method of the present invention.

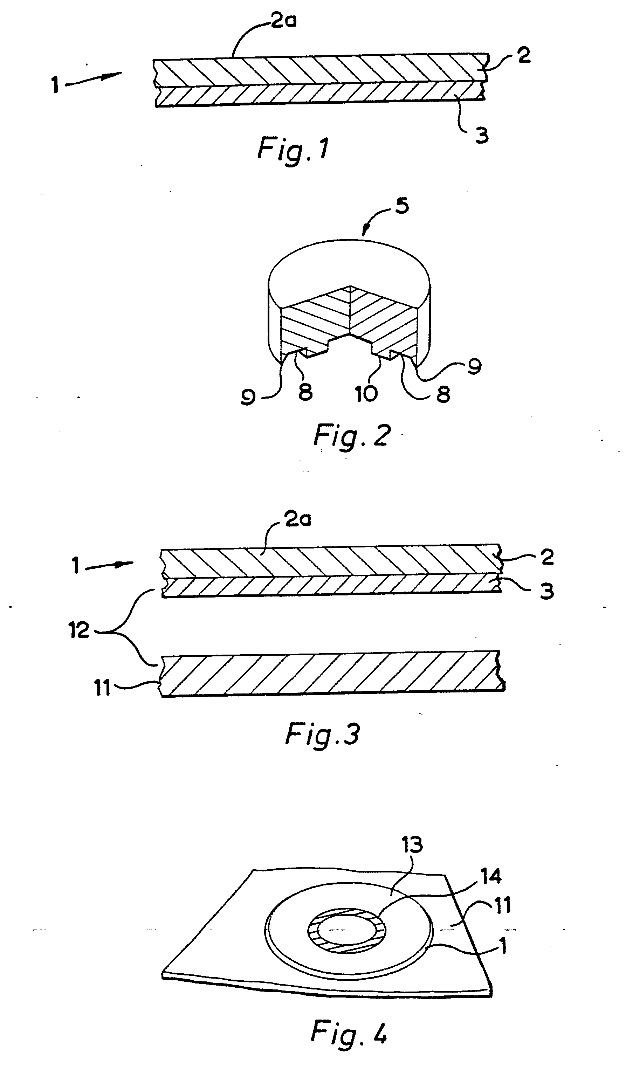

In Figure 1, a laminated material generally designated 1 comprises a layer 2 of a microcellular microporous coagulated polyurethane having a layer 3 of an activatable adhesive bonded to a lower surface thereof.

The adhesive layer 3 comprises an adhesive having a latent cross-linking capacity, and can be formed from a polyurethane pre-polymer solution. It has characteristics such that it cross-links rapidly and irreversibly at temperatures above about 90°C. At room temperature the adhesive layer 3 is stable, and substantially no cross-linking occurs at temperatures below about 80°C.

The adhesive layer 3 can be bonded to the microcellular layer 2 at a temperature of about 40°C, at which temperature the adhesive has characteristics of a hot-melt adhesive and is sufficiently "tacky" to create an effective bond between the adhesive layer and the polyurethane layer. Since the temperature at which the polyurethane layer 2 and the adhesive layer 3 are bonded is well below 80°C, substantially no cross-linking of the adhesive occurs.

Alternatively a solution of the adhesive layer in a solvent can be sprayed onto the lower surface of the microcellular layer 2, and the solvent can be removed by evaporation leaving the adhesive layer 3 on the lower surface.

If desired the adhesive layer 3 may comprise a hot-melt adhesive having a melting point of, for example, about 100°C.

In Figure 2 a die is generally designated 5. A lower surface 8 of the die 5 is provided with a severing edge 9. The lower surface 8 is also provided with a shaped projection 10 for producing a pattern on an upper surface 2a of the laminated material 1. Both the severing edge 9 and the shaped projection 10 act as heating zones.

The die 5 is shaped to cut a circular motif 13, having an annular pattern in discrete areas 14 thereon, from the laminated material 1, as shown in Figure 4.

Referring to Figure 3 the laminated material 1 is arranged over a substrate 11, so that the adhesive layer 3 faces the substrate.

The laminated material 1 and the substrate 11 in Figure 3 form an assembly 12 which is subjected to heat and pressure using the die 5.

As the die 5 is pressed into contact with the laminated material 1 the adhesive layer 3 is activated in the regions which underlie the severing edge 9 and the shaped projection 10 by the heat from the die. The temperature of the heating zones of the die 5 is about $150^{o}C$ and causes the activated areas of the adhesive to cross-link irreversibly in order to bond the laminated material 1 to the substrate 11. It will be appreciated that when the adhesive layer 3 comprises a hot-melt adhesive, the adhesive melts, but, but does not cross-link irreversibly. The severing edge 9 defines the shape of the motif 13 which it is desired to cut from the laminated material 1 and bond to the substrate 11, and it cuts the laminated material 1 at the same time as the adhesive layer 3 is activated.

The shaped projection 10 of the die 5 compresses and heats the discrete areas 14 of the upper surface 2a of the laminated material 1 which underlie the shaped projection 10 of the die 5. This causes the microcellular structure to be compacted in this region, and alters the apparent colour of the compressed part of the upper surface 2a of the laminated material 1 in the discrete areas 14. In this way a "two-tone" effect is produced on the upper surface 2a of the laminated material 1.

After bonding has been effected the die 5 is withdrawn and the part of the laminated material 1 not corresponding to the motif 13 can be removed leaving the motif bonded to the substrate 11 as shown in Figure 4.

For convenience, in Figure 4 layers 2 and 3 of the laminated material 1 have been shown as a single layer.

It will be appreciated that the shape of the severing edge 9 and the projection 10 may be altered in order to change the configuration of the motif 13 or the descrete areas 14. In addition, further shaped projections 10 may be provided in order to create a colour change in further discrete areas 14.

0158535

## CLAIMS

1. A laminated material comprising a layer of microcellular material capable of changing colour in response to the application of heat and pressure, and a layer of adhesive bonded thereto.

2. A laminated material according to claim 1, in which the microcellular material comprises a microporous coagulated polyurethane.

3. A laminated material according to claim 1 or 2 in which the microcellular material is capable of changing colour at temperatures in the range of $120^{o}C$ to $180^{o}C$.

4. A laminated material according to claim 1 or 2 in which the microcellular material is capable of changing colour at temperatures in the range of $135^{o}C$ to $170^{o}C$.

5. A laminated material according to claim 1 or 2 in which the microcellular material is capable of changing colour at temperatures in the range of $145^{o}C$ to $180^{o}C$.

6. A laminated material according to any preceding claim in which the adhesive is an activatable adhesive.

7. A laminated material according to Claim 6 in which the adhesive can be activated in response to the application of heat, pressure, a solvent or ultrasonics.

8. A laminated material according to any preceding claim in which the adhesive layer comprises a hot-melt adhesive.

9. A laminated material according to claim 8 in which the hot-melt adhesive has a melting point above about $90^{o}C$.

10. A laminated material according to claim 7, in which the adhesive has a latent cross-linking adhesive capacity, and can be cross-linked by heat.

11. A laminated material according to Claim 10, in which the adhesive is stable at room temperature, and cross links rapidly and irreversibly at temperatures above about $90^{o}C$.

12. A method of applying a decorative layer or a motif to a substrate, comprising assembling a laminated material according to any preceding claim with the substrate, applying pressure by means of a heated die to compress discrete areas of the upper surface of the microcellular material, and activating the adhesive in order to effect bonding between the laminated material and the substrate.

13. A method according to claim 12, in which the die includes a shaped projection which is adapted to heat and compress the discrete areas of the microcellular material, thereby changing the colour of the microcellular material in said discrete areas.

14. A method according to Claim 12 or 13, in which the die includes a severing edge adapted to cut the decorative layer or motif from the laminated material.

15. A method according to claim 14, in which said severing edge is adapted to act as a heating zone in order to activate the adhesive in the peripheral regions of the decorative layer or motif.

16. A method according to any of claims 12 to 15 in which the die is heated to a temperature in the range $120^{\circ}C$ to $180^{\circ}C$.

17. A method according to any of claims 12 to 15 in which the die is heated to a temperature in the range of $135^{\circ}C$ to $180^{\circ}C$.

18. A method according to any of claims 12 to 15 in which the die is heated to a temperature in the range of $145^{\circ}C$ to $180^{\circ}C$.

19. A label provided on a substrate, said label comprising a laminated material according to any of claims 1 to 11.

20. A label according to claim 19 in which the substrate is a garment.

0158535

Fig.1

Fig.2

Fig.3

Fig. 4